Europäisches Patentamt

European Patent Office

Office européen des brevets

(19)

(11) Numéro de publication: **0 190 967**
**B1**

(12) # FASCICULE DE BREVET EUROPÉEN

(45) Date de publication du fascicule du brevet:
**02.08.89**

(51) Int. Cl.⁴: **G 21 C 7/12**

(21) Numéro de dépôt: **86400151.6**

(22) Date de dépôt: **24.01.86**

(54) **Mécanisme de commande et d'accrochage pour barre de réglage de réacteur nucléaire à caloporteur liquide.**

(30) Priorité: **24.01.85 FR 8500989**

(43) Date de publication de la demande:
**13.08.86 Bulletin 86/33**

(45) Mention de la délivrance du brevet:
**02.08.89 Bulletin 89/31**

(84) Etats contractants désignés:
**AT BE CH DE GB IT LI SE**

(56) Documents cité:
**EP-A-0 034 103**
**EP-A-0 054 788**
**DE-A-2 328 885**
**US-A-3 088 901**

(73) Titulaire: **FRAMATOME, Tour Fiat 1, Place de la Coupole, F-92400 Courbevoie (FR)**

(72) Inventeur: **Savary, Fernand, 14, rue Prince de Condé, F-95320 Saint Leu la Foret (FR)**
Inventeur: **Peletan, René, 10, rue Adam, F-94120 La Varenne Saint Hilaire (FR)**
Inventeur: **Desfontaines, Guy, 18, rue Jean Jaurès, F-92800 Puteaux (FR)**
Inventeur: **Cochin, Serge, 4, allée de l'Ecureuil, F-78180 Montigny le Bretonneux (FR)**

(74) Mandataire: **Fort, Jacques, CABINET PLASSERAUD 84, rue d'Amsterdam, F-75009 Paris (FR)**

EP 0 190 967 B1

LIBER, STOCKHOLM 1989

## Description

L'invention a pour objet un mécanisme de déplacement longitudinal et d'accrochage de la tige d'une barre de réglage de réacteur nucléaire comportant une cuve occupée par un caloporteur liquide sous pression, mécanisme du type comprenant une enceinte coaxiale à la tige et constituant un cylindre hydraulique dans lequel la tige coulisse en délimitant une chambre de décompression, et des moyens 4 d'accrochage mécanique de la tige en position haute.

L'invention est notamment applicable à la constitution de mécanismes de commande de barres de réglage susceptibles d'être placées, au cours de la vie du réacteur, soit dans une position basse où elles sont insérées dans le coeur du réacteur, soit dans une position haute où, au contraire, elles sont hors du coeur. Ce cas est notamment celui des barres de réglage comportant des crayons contenant du matériau fertile et destinés à modifier le spectre d'énergie des neutrons dans un réacteur au fur et à mesure de l'épuisement du combustible dans celui-ci.

On connaît déjà des mécanismes du type ci-dessus défini. Par exemple, le EP-A-0 054 788 correspondant au FR-A-2-496 193 décrit un mécanisme dont la chambre de décompression est reliée à un réservoir de décharge à basse pression par une tuyauterie munie d'une électrovanne. On lève la barre de réglage en ouvrant l'électrovanne pour créer une différence de pression qui applique à la tige une force dirigée vers le haut. Les moyens d'accrochage mécanique de la tige en position haute sont constitués par un dispositif à aiguillage bistable qui change de position à chaque cycle d'ouverture et de fermeture de l'électrovanne.

Un tel mécanisme a l'avantage de la simplicité.

Mais en contrepartie il comporte des inconvénients.

Un premier inconvénient est qu'il n'est pas possible de commander, à volonté et indépendamment, la force tendant à lever la barre et la vitesse de montée. En effet ces grandeurs sont toutes deux fonction croissante du degré d'ouverture de l'électrovanne et fonction décroissante des fuites entre la tige et le cylindre. Il n'est par exemple pas possible d'augmenter la force de levage tout en réduisant la vitesse de déplacement. De plus, la relation qui existe entre l'ouverture de l'électrovanne et la force (ou la vitesse) varie dans le temps, notamment par suite des phénomènes d'érosion ou de colmatage.

Un autre inconvénient est lié au fait que les réacteurs comportent en général plusieurs dizaines de barres de réglage. Si chaque mécanisme de déplacement comporte une tuyauterie et une électrovanne de liaison avec un réservoir de décharge à basse pression, il faut prévoir de nombreuses tuyauteries qui, puisqu'elles véhiculent du caloporteur primaire, doivent respecter des règles de sécurité très contraignantes, doivent être protégés contre les séismes et les projectiles éventuels. Ces tuyauteries et leurs électrovannes sont des sources potentielles de fuites susceptibles de provoquer des levées incontrôlées de barres de réglage.

L'invention vise notamment à fournir un mécanisme de déplacement et d'accrochage qui conserve la simplicité de réalisation associé à des moyens hydrauliques à échappement de caloporteur, tout en autorisant une commande de la vitesse de levée.

L'invention vise également à simplifier la commande des mécanismes sur un réacteur comportant un grand nombre de barres de réglage, dont certaines doivent être déplacées simultanément pour conserver une distribution symétrique du flux neutronique dans le coeur. On pourrait penser que ce résultat peut être atteint, lorsque le mécanisme de déplacement est du type à tuyauterie d'échappement et électrovanne, en reliant les chambres de décompression de tous les mécanismes qui doivent fonctionner simultanément à un même collecteur équipé d'une électrovanne unique. Mais une telle conception doit être écartée lorsque les moyens d'accrochage sont du type bistable, commandé à chaque cycle de fonctionnement de l'électrovanne. En effet, si pour une raison fortuite il n'y a pas accrochage ou décrochage correct dans l'un des mécanismes, ce dernier fonctionnera ensuite de façon déphasée par rapport aux autres mécanismes raccordés au même collecteur.

Un mécanisme du type ci-dessus défini suivant l'invention comporte des premiers moyens électromagnétiques placés à l'extérieur de l'enceinte, commandant des moyens hydrauliques permettant de réduire la pression du caloporteur dans la chambre de décompression en vue de provoquer la levée pas-à-pas de la tige avec un pas déterminé et des seconds moyens électromagnétiques, différents des premiers, également placés à l'extérieur de l'enceinte, commandant des moyens hydrauliques de mise en communication de la chambre de décompression avec la cuve pour provoquer la descente de la tige et le désarmement desdits moyens d'accrochage, les moyens hydrauliques étant placés dans l'enceinte.

Dans une réalisation avantageuse, les moyens hydrauliques comportent une pompe alternative à déplacement positif interposée entre la chambre de décompression et l'intérieur de la cuve, dont le piston est actionné par les premiers moyens électromagnétiques et provoque, à chaque va-et-vient, une levée d'amplitude déterminée de la tige.

Grâce à cette disposition, on peut régler de façon indépendante la force de levage et la vitesse de levée. La force de levée dépend en effet principalement de la force exercée par les premiers moyens électromagnétiques. La vitesse de levée dépend essentiellement de la fréquence d'excitation de ces moyens. La vitesse de descente de la barre et d'insertion de cette dernière dans le coeur peut être ajustée de façon indépendante, par réglage de la perte de charge sur le trajet d'écoulement entre la chambre de décompression et la cuve, ouvert lorsque les seconds moyens électromagnétiques sont excités.

On voit que le mécanisme suivant l'invention ne comporte aucune tuyauterie véhiculant du caloporteur primaire à l'extérieur de la cuve, ce qui simplifie l'installation générale et supprime les risques de fuite pouvant entraîner des retraits incontrôlés de barres de réglage ou la nécessité de compenser ces fuites en permanence. Enfin, du fait que la fonction de levage de la tige et la fonction d'accrochage de cette tige sont séparées, on peut commander les premiers moyens électromagnétiques de plusieurs barres par un même générateur sans risque de déphasage en cas de défaillance du système d'accrochage d'un des mécanismes.

La chute de la barre peut être provoquée par gravité, en ouvrant un trajet de circulation de caloporteur entre l'intérieur de la cuve et la chambre de décompression. Une variante de réalisation consiste à utiliser la pompe pour accélérer cette chute.

L'invention sera mieux comprise à la lecture de la description qui suit de modes particuliers d'exécution, donnés à titre d'exemples non limitatifs. La description se réfère aux dessins qui l'accompagnent, dans lesquels:

- la Figure 1 est une vue en coupe verticale d'un premier mécanisme suivant l'invention, la tige étant représentée accrochée en position haute (en traits mixtes) et an butée haute (en traits pleins);

les Figures 2A et 2B sont des schémas hydrauliques de principe destinés à faire apparaître le fonctionnement du mécanisme de la Figure 1;

les Figures 3A et 3B sont des schémas à grande échelle, montrant une fraction d'un mécanisme constituant une variante de celui de la Figure 1, dans deux états de fonctionnement.

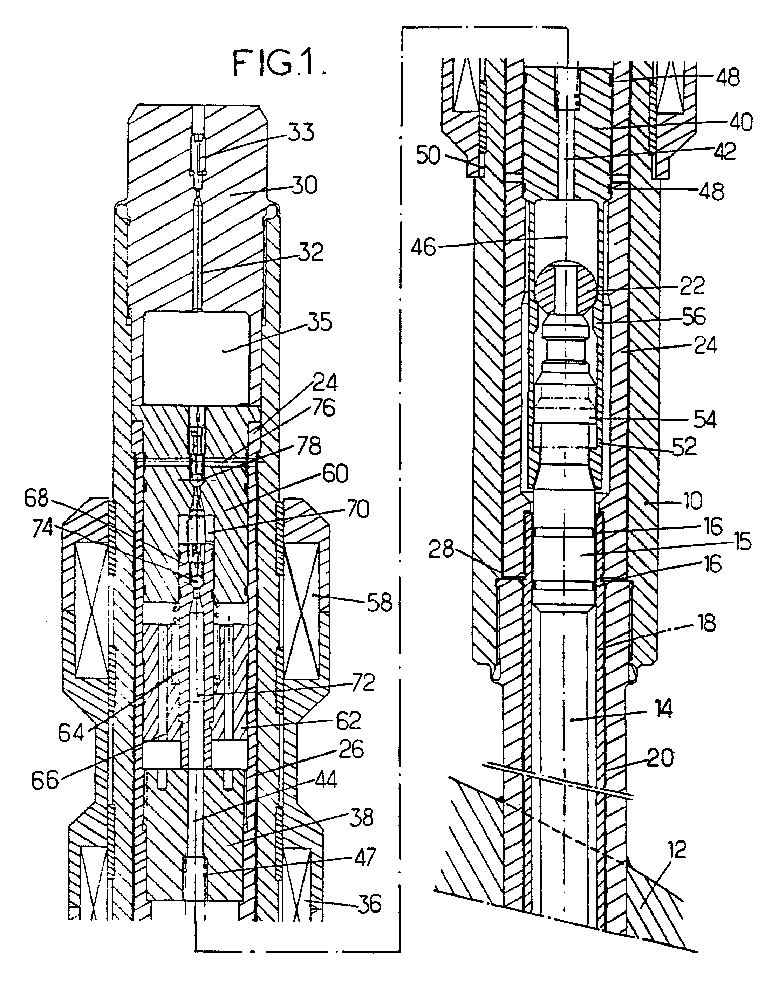

Le mécanisme de commande et d'accrochage montré en Figure 1 est logé dans une enceinte tubulaire 10 en plusieurs pièces assemblées, traversant le couvercle 12 de la cuve du réacteur, construite de façon à supporter la pression du fluide caloporteur primaire du réacteur. Dans cette enceinte est placée une tige 14 de commande de barre de réglage, reliée à cette dernière par un accouplement désarmable, non représenté. La tige présente, à proximité de son extrémité haute, un renflement 15 formant piston, muni de segments d'étanchéité 16. Une chemise 18 est montée à l'intérieur de l'enceinte 10 et fixée, à sa partie supérieure, à une seconde chemise 24. Elle présente un diamètre intérieur tel que les segments 16 coulissent sur la chemise de façon sensiblement étanche. Son diamètre extérieur est tel qu'un espace annulaire 20 débouchant à l'intérieur de la cuve subsiste entre la chemise 18 et l'enceinte 10. La chemise s'étend suffisamment haut pour que les segments restent en contact avec elle, même lorsque la tige occupe la position haute, montrée en Figure 1, dans laquelle elle prend appui contre une broche transversale 22, formant came, placée en travers de l'enceinte. La seconde chemise 24 est montée dans l'enceinte, dans le prolongement de la chemise 18. Elle limite avec l'enceinte un second espace annulaire 26, qui communique avec l'espace 20 par des rainures radiales 28.

La partie supérieure de l'enceinte 10 est fermée par un bouchon étanche 30 dans lequel est prévu un trou de purge 32 obturable par une vis 33.

Lors du remplissage du circuit primaire du réacteur, de l'air peut s'emmagasiner dans l'enceinte sous pression du mécanisme. Une chambre de collecte 35, de volume largement supérieur à celui occupé par l'air à la pression normale de service, est prévue sous le bouchon.

Le mécanisme suivant l'invention comporte, d'une part, un dispositif désarmable d'accrochage de la tige de commande en position haute, d'autre part, un dispositif de levée pas-à-pas. Ces deux dispositifs seront successivement décrits.

## Dispositif d'accrochage

Le dispositif d'accrochage est monté dans la chemise 24. Il comporte des moyens électromagnétiques ayant une partie fixe et une partie mobile. La partie fixe comprend une bobine de commande 36 placée à l'extérieur de l'enceinte et coaxialement à cette dernière et une pièce polaire fixe 38 fixée à l'intérieur de la chemise 24. La partie mobile est constituée par une pièce polaire 40 mobile entre la position basse où elle est montée en Figure 1 et une position haute où elle est en appui contre la pièce polaire fixe 38. Les deux pièces polaires sont percées de trous axiaux 42 et 44 mettant en communication le volume délimité par la tige et la chemise 24 qui constitue chambre de décompression 46, et le volume situé au-dessus de la pièce polaire fixe 38. Un ressort de rappel 47 tend à maintenir la pièce polaire mobile 40 dans la position basse où elle est montée en Figure 1.

La pièce polaire mobile constitue, d'une part, un distributeur, d'autre part, un grappin d'accrochage de la tige. Pour qu'il puisse jouer le rôle de distributeur, il est muni de deux segments d'étanchéité 48 écartés l'un de l'autre et coulissant de façon étanche sur la face interne de la chemise 24. Des trous 50 traversent la chemise 24 à une hauteur telle qu'ils débouchent entre les segments 48 lorsque la pièce polaire 40 est an position basse et qu'ils mettent en communication l'espace annulaire 26 avec la chambre de décompression 46 lorsque la pièce polaire 40 est levée, c'est-à-dire que la bobine de commande 36 est alimentée.

Pour permettre à la pièce polaire 40 de jouer le rôle de grappin, elle est équipée de lames flexibles 52 dirigées vers le bas, terminées par des becs de préhension. Ces becs ont une forme telle que les lames puissent être écartées par un renflement 54 de la tige 14 lorsque cette dernière arrive à la fin de sa course vers le haut, mais qu'elles interdisent à la tige de redescendre.

Des moyens destinés à provoquer l'ouverture forcée des lames par soulèvement de la pièce polaire mobile 40 sont prevus. Ils comprennent, dans le mode de réalisation montré en Figure 1, la broche 22 et des bossages internes 56 des lames. Ces bossages 56 sont placés de façon à être immédiatement au-dessous de la broche 22 lorsque la pièce polaire mobile 40 est en position basse, et à venir au droit de la broche lorsque la pièce polaire mobile 40 est soulevée.

## Mécanisme de déplacement de la tige

Le mécanisme de déplacement de la tige comprend essentiellement une pompe à piston à commande électromagnétique ayant une partie fixe et une partie mobile.

La partie fixe de la pompe comprend une bobine 58 similaire à la bobine 36 et une pièce polaire fixe 60 montée à l'intérieur de la chemise 24. L'étanchéité entre la chemise 24 et la pièce polaire 60 est assurée par un ou plusieurs segments.

La partie mobile de la pompe est constituée par une pièce polaire 62 déplaçable entre la position de repos où elle est montrée en Figure 1 et une position de travail où elle vient en appui contre la pièce polaire fixe 60, sous l'action de la bobine 58 lorsque cette dernière est alimentée. Un ressort de rappel 64 comprimé entre les pièces polaires tend à maintenir la pièce 62 dans sa position basse. Les pressions qui s'exercent sur les deux faces de la pièce polaire mobile 62 sont équilibrées par des passages 66 ménagés dans son corps.

La pièce polaire mobile 62 comporte un prolongement de diamètre réduit, constituant un plongeur 68 muni de joints d'étanchéité, qui délimite, avec un chambrage de la pièce polaire fixe 60 dans lequel il pénètre, une chambre de pompage 70. Le circuit hydraulique de la pompe comporte un perçage axial 72 du plongeur, muni d'un clapet d'admission 74, reliant la chambre de pompage 70 au volume situé en dessous de la pièce polaire mobile 62, et donc à la chambre de décompression 46. Ce circuit comporte de plus, à partir de la chambre de pompage 70, un conduit 76 muni d'un clapet de refoulement 78. Ce conduit 76 se prolonge par un ou plusieurs trous ménagés dans la chemise 24, de sorte que le conduit 76 est en communication permanente avec l'intérieur de la cuve du réacteur.

Les clapets d'aspiration et de refoulement peuvent avoir une constitution classique et notamment être constitués par une bille repoussée par un ressort de rappel vers un siège

On voit que la pompe ainsi réalisée est toute entière intégrée dans la chemise 24, exception faite de la bobine de commande 58.

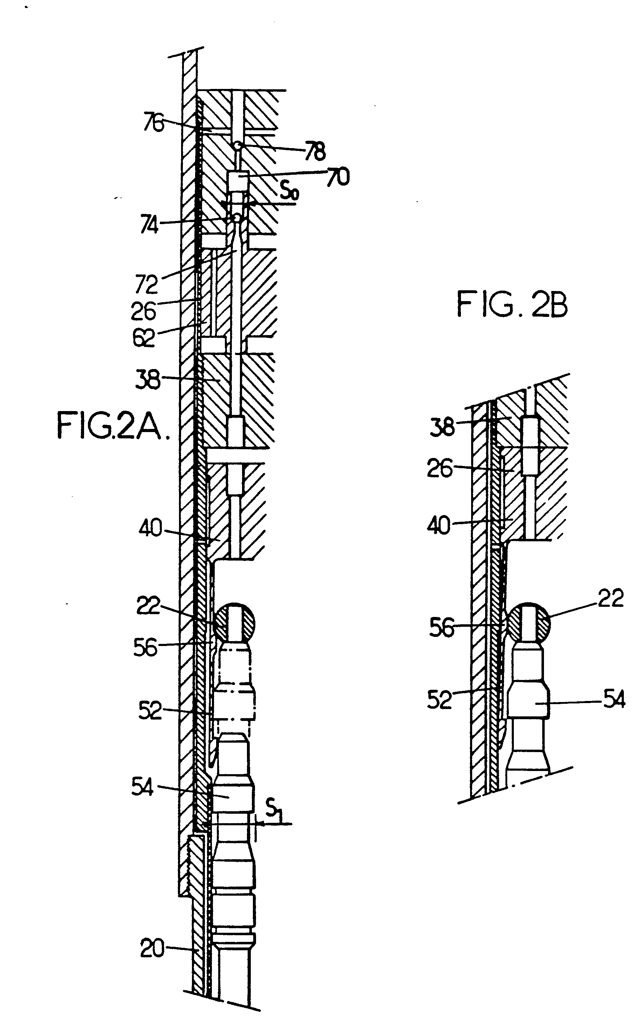

Le fonctionnement du mécanisme sera maintenant décrit en faisant référence à la Figure 2, ou seuls sont montrés les éléments principaux du mécanisme, l'échelle n'étant pas respectée pour plus de clarté.

## Levée de la tige commande

La levée de la tige de commande s'effectue pas-à-pas, chaque pas correspondant à un cycle excitation-désexcitation de la bobine 58. Chaque excitation de la bobine 58 déplace la pièce polaire 62 de la position montrée sur la Figure 2A à la position de butée contre la pièce polaire fixe 60. La contenu de la chambre de pompage 70 est refoulé par le conduit 76 et les espaces annulaires 26 et 20 dans la cuve, cette levée provoque l'apparition, sur la tige 14, d'un effort de soulèvement qui, si les fuites sont négligeables, est égal au produit de la force exercée sur la pièce polaire mobile 62 par le rapport $S_1/S_0$, $S_1$ étant la section délimitée par les segments du piston 15 et $S_0$ la section du plongeur 68. Quant à la course de la tige 14, elle est égale à la course de la pièce polaire mobile 62 multipliée par la rapport $S_0/S_1$.

Lorsque la bobine 58 est désexcitée, la pièce polaire mobile 62 revient dans sa position de repos. La chambre de pompage 70 se remplit à partir de la chambre de décompression 46 à travers le clapet d'aspiration 74. Le mouvement descendant de la pièce polaire mobile 62 s'effectuant sans variation du volume offert au liquide au-dessus de la tige 14, celle-ci conserve sa position.

On voit donc qu'à chaque cycle d'excitation et de désexcitation de la bobine 58 la tige de commande 14 monte d'une hauteur égale au produit de la course de la pièce polaire mobile 62 par le rapport $S_0/S_1$.

## Accrochage

Dans la dernière partie de sa course de levée, la tige de commande 14 pénètre entre les lames 52. La précontrainte du ressort 47 est choisie supérieure à l'effort vertical que doit exercer le renflement 54 pour écarter les lames 52. En conséquence, le renflement 54 dépasse les lames sans entraîner la pièce polaire mobile 40. Dès que l'épaulement inférieur du renflement 54 a dépassé les becs terminaux des lames flexibles 52, celles-ci se referment et interdisent la descente de la tige, comme indiqué en traits pleins sur la Figure 1.

Un organe détecteur est avantageusement prévu pour fournir un signal lorsque la tige de commande a dépassé le niveau des becs. Ce détecteur est par exemple un interrupteur à lame souple (non représenté) placé dans une ampoule étanche à l'extérieur de l'enceinte 10, actionné par un aimant permanent monté à la partie supérieure de la tige 14. Le signal fourni par le détecteur peut être utilisé pour arrêter la répétition des cycles d'excitation-désexcitation de la bobine 58.

S'il n'y a aucune fuite au niveau des segments d'étanchéité ou des clapets à bille, la tige de commande 14 reste ainsi dans sa position haute, en appui contre la broche 22, comme cela est indiqué en traits mixtes sur la Figure 2A. Dans le cas contraire, la tige 14 redescend lentement jusqu'au moment où elle est en appui sur les becs des lames flexibles 52 dont le profil est tel que le poids de la tige tend à refermer ces lames, comme indiqué en traits mixtes sur la Figure 1. La barre est ainsi immobilisée dans une position où elle se trouve hors du coeur.

### Décrochage

L'opération de décrochage sera généralement effectuée alors que les organes sont dans la position initiale indiquée en traits mixtes sur la Figure 1. On commence par relever la tige 14 par mise en action du mécanisme de déplacement jusqu'à ce que l'interrupteur à lame souple (non représenté) indique que la tige s'est dégagée des becs des lames 52. On excite alors la bobine de commande 36 pour lever la pièce polaire mobile 40. Au cours de cette levée, les lames flexibles 52 sont écartées par la broche 22 et la chambre de décompression 46 est reliée à la cuve par l'intermédiaire des espaces annulaires 20 et 26. La tige de commande et la barre de réglage descendent lentement sous l'action de leur poids, la vitesse de chute étant déterminée par le coefficient de perte de charge ajustable par choix de la section des trous 50.

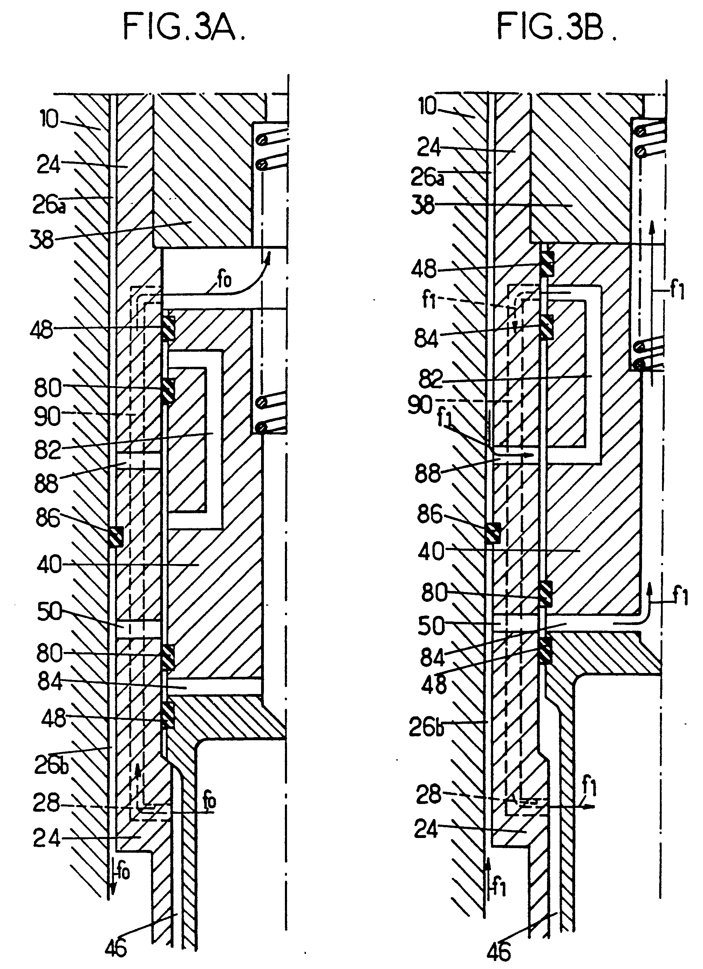

·L'invention est susceptible de nombreuses variantes de réalisation, portant aussi bien sur les moyens d'accrochage que sur les moyens de déplacement de la tige. Les Figures 3A et 3B montrent schématiquement une variante des moyens d'accrochage permettant d'utiliser la pompe pour accélérer la descente de la tige et de la barre de réglage.

Sur les Figures 3A et 3B, les organes correspondant à ceux de la Figure 1 sont désignés par le même numéro de référence. Les moyens de déplacement sont inchangés. Les moyens d'accrochage comportent encore une pièce polaire mobile 40 mais elle comporte, en plus des segments d'étanchéité 48, deux segments 80 placés chacun à proximité d'un segment 48, mais plus rapprochés du milieu de la pièce polaire. Dans cette pièce polaire 40 sont ménagés deux conduits internes 82 et 84. Le conduit 82 relie l'espace compris entre le couple supérieur de segments 48 et 80 et l'espace compris entre les segments 80. Le conduit 84 relie le trou central 42 de la pièce polaire 40, qui cette fois est borgne, à l'espace délimité par le couple inférieur de segments 80 et 48.

Dans le mode de réalisation des Figures 3A et 3B, l'espace annulaire 26 est séparé, par un joint d'étanchéité 86, en une partie haute et une partie basse. Les trous 50 relient la partie basse à une zone de l'alésage de la chemise 24 qui se trouve entre les segments 80 lorsque la pièce polaire est au repos (Figure 3A) et face au conduit 84 lorsque cette pièce polaire vient en butée contre la pièce polaire fixe 38 à la suite de l'excitation de la bobine de commande (Figure 3B). Des trous de transfert 88 relient la partie haute 26a à une zone de l'alésage de la chemise 24 située entre les segments 80 quelle que soit la position de la pièce polaire mobile 40.

Enfin, un canal de transfert interne 90 percé dans le corps de la chemise 24 met en communication la chambre de décompression 46 avec une zone de l'alésage de la chemise 24 qui est située au-dessus des segments 48 et 80 lorque la pièce polaire mobile 40 est au repos (Figure 3A) entre les segments 48 et 80 de la paire supérieure lorsque la bobine de commande 36 est excitée (Figure 3B).

Dans la variante de réalisation montrée en Figures 3A et 3B, la levée de la barre s'effectue à l'aide de la pompe en maintenant la pièce polaire mobile 40 au repos (Figure 3A). La chute de la barre est provoquée en amenant la pièce polaire mobile 40 dans la position montrée en Figure 3B. On voit que la chute intervient comme dans le cas montré en Figure 1 si la pompe est maintenue au repos, mais par l'intermédiaire des clapets 74 et 78.

Lorsque l'on souhaite accélérer la descente de la barre, il suffit de mettre la pompe en action.

Dans les deux cas, la circulation de l'eau s'effectue suivant le trajet indiqué par les flèches f1 sur la Figure 3B, que l'on peut comparer au trajet lors de la levée, indiqué par les flèches f0 sur la Figure 3A.

Quel que soit le mode de réalisation utilisé, il doit, lors de sa mise en place, être rempli de caloporteur sous pression. Pour cela, on excite la bobine de commande 36, ce qui met la chambre de décompression 46 en communication avec l'espace annulaire 26. Le remplissage de la chambre de pompage 70 s'effectue alors dès que l'on augmente la pression du réfrigérant primaire. Le clapet 74 s'ouvre an effet pour autoriser ce remplissage. Puis la chambre de collecte 35 se remplit par l'intermédiaire de l'espace annulaire 26 et des conduits 76 et peut être purgée par ouverture de la vis 33.

### Revendications

1. Mécanisme de déplacement longitudinal et d'accrochage de la tige d'une barre de réglage de réacteur nucléaire comportant une cuve occupée par un caloporteur liquide sous pression, comprenant une enceinte (10) coaxiale à la tige (14) et constituant un cylindre hydraulique dans lequel la tige coulisse en délimitant une chambre de décompression, et des moyens (52, 54) d'accrochage mécanique de la tige en position haute, caractérisé en ce qu'il comporte des premiers moyens électromagnétiques (58) placés à l'extérieur de l'enceinte, commandant des moyens hydrauliques (68, 70) permettant de réduire la pression du caloporteur dans la chambre de décompression (46) en vue de provoquer la levée pas-à-pas de la tige avec un pas déterminé et des seconds moyens électromagnétiques (36), différents des premiers, également placés à l'extérieur de l'enceinte, commandant des moyens hydrauliques (40) de mise en communication de la chambre de décompression avec la cuve pour provoquer la descente de la tige et le désarmement desdits moyens d'accrochage, les moyens hydrauliques étant placés dans l'enceinte.

2. Mécanisme selon la revendication 1, caractérisé en ce que les moyens électromagnétiques (36, 58) comportent deux bobines alimentables indépendamment l'une (58) pour provoquer par pompage la levée pas-à-pas de la tige, l'autre (36) pour libérer la tige et relier la chambre de décompression à la cuve lorsqu'elle est alimentée.

3. Mécanisme selon la revendication 1, caractérisé en ce que lesdits moyens hydrauliques (68, 70) permettant de réduire la pression du caloporteur dans la chambre de décompression comportent une pompe alternative à déplacement positif interposée entre la chambre de décompression et l'intérieur de la cuve, dont le piston est actionné par lesdits premiers moyens électromagnétiques (58) et provoque à chaque va-et-vient une levée d'amplitude déterminée de la tige.

4. Mécanisme selon la revendication 3, caractérisé en ce que la pompe comporte une pièce polaire (62) déplaçable par les premiers moyens électromagnétiques (58) entre deux positions prédéterminées, comportant un plongeur (68) coopérant avec une pièce polaire fixe (60) pour délimiter une chambre (70) de pompage de volume variable reliée au cylindre hydraulique (46) par un clapet d'admission (74) et à la cuve par un clapet de refoulement (78).

5. Mécanisme selon la revendication 4, caractérisé en ce que ledit plongeur délimite la chambre de pompage avec une pièce polaire fixe (60) appartenant aux premiers moyens électromagnétiques (58), l'une des positions prédéterminées correspondant à la venue en butée de la pièce polaire mobile (62) contre la pièce polaire fixe (60).

6. Mécanisme selon la revendication 4 ou 5, caractérisé en ce que la chambre (70) de pompage présente une section plus faible que celle du cylindre hydraulique, de façon que la force exercée par différence de pression sur la tige soit supérieure à la force exercée par les premiers moyens électromagnétiques (58) sur la pièce polaire mobile (62).

7. Mécanisme selon l'une quelconque des revendications 3 à 6, caractérisé en ce que le trajet de circulation hydraulique entra le clapet de refoulement (78) et la cuve comporte un espace annulaire (26, 20) ménagé entre une chemise (24, 18) doublant intérieurement ladite enceinte (10).

8. Mécanisme selon l'une quelconque des revendications précédentes, caractérisé an ce que les moyens d'accrochage (52, 54) comportent une pièce polaire (40) munie de lames flexibles (52) dirigées vers le bas et terminées par des becs de préhension, un renflement (54) de la tige (14), mobile entre une position basse dans laquelle les lames sont dans une position où elles interdisent la descente de la tige une fois que le renflement a dépassé les becs vers le haut et une position haute dans laquelle les lames sont écartées par une came (22) pour libérer la tige.

9. Mécanisme selon la revendication 8, caractérisé en ce que la pièce polaire mobile (40) constitue un distributeur ouvrant un trajet de fuite entre la chambre décompression (46) et la cuve lorsqu'elle est en position haute.

10. Mécanisme selon l'une quelconque des revendications précédéntes, caractérisé en ce que les moyens d'accrochage (52, 54) sont prévus pour inverser les liaisons des moyens hydrauliques avec la chambre de décompression et avec la cuve lorsqu ils sont désarmés, de façon à permettre d'accélérer la descente de la tige par mise en oeuvre desdits moyens hydrauliques à l'aide des premiers moyens électromagnétiques.

**Patentansprüche**

1. Mechanismus zur Längsverstellung und Verriegelung des Schaftes eines Regelstabes eines Kernreaktors, der ein mit einer Kühlflüssigkeit unter Druck gefülltes Reaktorgefäß aufweist, mit einer Hülle (10), die zum Schaft (14) koaxial ist und einen Hydraulikzylinder bildet, in welchem der Schaft gleitet, wobei er eine Druckverminderungskammer begrenzt, und Mitteln (52, 54) zum mechanischen Verriegeln des Schaftes in der angehobenen Position, dadurch gekennzeichnet, daß er erste elektromagnetische Mittel (56) aufweist, die an der Außenseite der Hülle angeordnet sind und hydraulische Mittel (66, 70) betätigen, die es ermöglichen, den Druck des Kühlmittels in der Druckverminderungskammer (46) zu reduzieren, um ein schrittweises geben des Schaftes mit einer vorbestimmten Schrittgröße hervorzurufen, und zweite elektromagnetische Mittel (36), die sich von den ersten Mitteln unterscheiden, ebenfalls an der Außenseite der Hülle angeordnet sind und hydraulische Mittel (40) zur Verbindung der Druckverminderungskammer mit dem Gefäß betätigen, um ein Absenken des Schaftes und ein Lösen der erwähnten Verriegelungsmittel hervorzurufen, wobei die Hydraulikmittel in der Hülle angeordnet sind.

2. Mechanismus nach Anspruch 1, dadurch gekennzeichnet, daß die elektromagnetischen Mittel (36, 58) zwei Spulen aufweisen, die unabhängig voneinander erregbar sind, wobei die eine (58) dazu bestimmt ist, durch Pumpen das schrittweise Anheben des Schaftes hervorzurufen, wogegen die andere (36) dazu bestimmt ist, bei Erregung den Schaft freizugeben und die Druckverminderungskammer mit dem Gefäß zu verbinden.

3. Mechanismus nach Anspruch 1, dadurch gekennzeichnet, daß die Hydraulikmittel (66, 70), die es ermöglichen, den Druck des Kühlmittels in der Druckverminderungskammer zu reduzieren, eine abwechselnd arbeitende Pumpe mit positiver Verstellung ausweisen, die zwischen die Druckverminderungskammer und das Innere des Gefäßes zwischengeschaltet ist, wobei der Puppenkolben durch die ersten elektromagnetischen Mittel (58) betätigt wird und bei jedem Hin- und Hergang ein Anheben des Schaftes mit einer vorbestimmten Amplitude bewirkt.

4. Mechanismus nach Anspruch 3, dadurch gekennzeichnet, daß die Pumpe einen Polschuh (62) aufweist, der durch die ersten elektromagnetischen Mittel (56) zwischen zwei vorbestimmten Positionen verstellbar und mit einem Plunger (66) versehen ist, der mit einem feststehenden Polschuh (60) zusammenwirkt, um eine Pumpenkammer (70) mit veränderlichem Volumen zu begrenzen, die mit dem Hydraulikzylinder (46) über ein Einlaßventil (74) und mit dem Gefäß über ein Verdrängungsventil (78) in Verbindung steht.

5. Mechanismus nach Anspruch 4, dadurch gekennzeichnet, daß der Plunger die Pumpenkammer mit einem feststehenden Polschuh (60) begrenzt, der zu den ersten elektromagnetischen Mitteln (56) gehört, wobei eine der vorbestimmten Positionen dem Anschlag des beweglichen Polschuhs (62) gegen den feststehenden Polschuh (60) entspricht.

6. Mechanismus nach Anspruch 4 oder 5, dadurch gekennzeichnet, daß die Pumpenkammer (70) einen kleineren Querschnitt als der Hydraulikzylinder hat, so daß die durch den Druckunterschied auf den Schaft ausgeübte Kraft größer als die durch die erste elektromagnetischen Mittel (56) auf den beweglichen Polschuh (62) ausgeübte Kraft ist.

7. Mechanismus nach einem der Ansprüche 2 bis 6, dadurch gekennzeichnet, daß der hydraulische Strömungsweg zwischen dem Verdrängungsventil (78) und dem Gefäß einen Ringraum (26, 20) aufweist, der zwischen einem Doppelmantel (24, 18) im Inneren der Hülle (10) verläuft.

8. Mechanismus nach einem der vorhergehenden Ansprüche, dadurch gekennzeichnet, daß die Verriegelungsmittel (52, 54) einen Polschuh (40) aufweisen, der mit flexiblen Zungen (52) versehen ist, die nach unten gerichtet sind und in Greifnasen enden, wobei ein ist (54) des Schaftes (14) zwischen einer abgesenkten Position, in welcher die Zungen sich in einer Stellung befinden, in der sie das Absenken des Schaftes verhindern, sobald der Wulst die Nasen nach oben hin passiert hat, und einer angehobenen Position bewegbar ist, in welcher die Zungen durch einen Nocken (22) voneinander entfernt sind, um den Schaft freizugeben.

9. Mechanismus nach Anspruch 8, dadurch gekennzeichnet, daß der bewegliche Polschuh (40) einen Verteiler bildet, der einen Leckweg zwischen der Druckverminderungskammer (46) und dem Gefäß öffnet, wenn er sich in der angehobenen Position befindet.

10. Mechanismus nach einem der vorhergehenden Ansprüche, dadurch gekennzeichnet, daß die Verriegelungsmittel (52, 54) dazu bestimmt sind, die Verbindungen der hydraulischen Mittel mit der Druckverminderungskammer und mit dem Gefäß umzukehren, wenn sie gelöst sind, so daß sie es ermöglichen, das Absenken des Schaftes durch Betätigen der hydraulischen Mittel mit Hilfe der ersten elektromagnetischen Mittel zu beschleunigen.

**Claims**

1. Mechanism for longitudinally displacing and securing the shaft of a control bar of a nuclear reactor comprising a tank containing pressurized liquid coolant, comprising an enclosure (10) coaxial to the shaft (14) and forming a hydraulic cylinder in which the shaft slides while defining a decompression chamber, and means (52, 54) for mechanically securing the shaft in a higher position,
characterized in that it comprises first electromagnetic means (58) placed outside the enclosure, controlling hydraulic means (68, 70) for reducing the coolant pressure in the decompression chamber (46) for causing the shaft to move upwardly step by step with a predetermined step and second electro-magnetic means (36), different from the first ones, also placed outside the enclosure, controlling hydraulic means (40) for communicating the decompression chamber with the tank for causing the shaft to move down and disengaging said securing means, the hydraulic means being located within the enclosure.

2. Mechanism according to claim 1,
characterized in that the electro-magnetic means (36, 58) comprise two coils which may be independently energized, one (58) for causing the shaft to be lifted step by step by pumping, the other (36) for releasing the shaft and for connecting the decompression chamber to the tank when the second coil is energized.

3. Mechanism according to claim 1,
characterized in that said hydraulic means (68, 70) for reducing the pressure of the coolant within the decompression chamber comprise a positive displacement alternating pump located between the decompression chamber and the interior of the tank, whose piston is actuated by said first electromagnetic means (58) and causes an upward movement of predetermined amplitude of the shaft responsive to each reciprocation of the pump.

4. Mechanism according to claim 3,
characterized in that the pump comprises a pole piece (62) mowable by the first electro- magnetic means (58) between two predetermined positions, comprising a plunger (68) cooperating with a fixed pole piece (60) for defining a variable volume pumping chamber (70) connected to the hydraulic cylinder (46) by an intake valve (74) and to the tank by a discharge valve (78).

5. Mechanism according to claim 4,
characterized in that said plunger defines the pumping chamber with a fixed pole piece (60) belonging to the first electromagnetic means (58), one of the predetermined positions corresponding to the abutment of the mowable pole piece (62) against the fixed pole piece (60).

6. Mechanism according to claim 4 or 5,
characterized in that the pumping chamber (70) has a cross-section smaller than that of the hydraulic cylinder, so that the pressure differential force on the shaft be greater than the force exerted by the first electromagnetic means (58) on the mowable pole piece (62).

7. Mechanism according to any one of claims 3 to 6,
characterized in that the hydraulic flow path between the discharge valve (78) and the tank comprises an annular space (26, 20) formed between a liner (24, 18) internal to said enclosure (10) and said enclosure (10).

8. Mechanism according to any one of the preceding claims,
characterized in that the securing means (52, 54) comprise a pole piece (40) having downwardly direted flexible blades (52) and ending in gripping catches, a bulge on the shaft (14) mowable between a low position in which the blades are in a position where they prevent the shaft from moving downwards once the bulge has passed upwardly beyond the catches and a high position in which the blades are moved apart by a cam (22) so as to release the shaft.

9. Mechanism according to claim 8,
characterized in that the mowable pole piece (40) forms a valve which opens a leak path between the decompression chamber (46) and the tank when in a high position.

10. Mechanism according to any of the preceding claims,
characterized in that the securing means (52, 54) are arranged for reversing the connections of the hydraulic means with the decompression chamber and with the tank when they are disengaged, so as to accelerate the downward movement of the shaft upon actuation of said hydraulic means by the first electromagnetic means.

# FIG.1.

FIG. 2B

FIG.2A.

# FIG.3A.

# FIG.3B.